# EUROPÄISCHE PATENTSCHRIFT

(11) **EP 0 831 256 B1**
(45) Veröffentlichungstag und Bekanntmachung des Hinweises auf die Patenterteilung: **04.12.2002**
(21) Anmeldenummer: 97115984.3
(22) Anmeldetag: 13.09.1997
(51) Int. Cl.: F16H 63/16, F16H 63/18

(54) **Vorrichtung zum Schalten von automatisierten Fahrzeuggetrieben**
Shift actuator for an automatic gearbox of a vehicle
Dispositif de commande d'une boîte de vitesses automatique de véhicule

(30) Priorität: 19.09.1996 DE 19638269
(43) Veröffentlichungstag der Anmeldung: 25.03.1998
(73) Patentinhaber: ZF FRIEDRICHSHAFEN Aktiengesellschaft, 88038 Friedrichshafen (DE)
(72) Erfinder: Dreibholz, Ralf, Dr., 88079 Meckenbeuren (DE)

(56) Entgegenhaltungen:
- DE-A- 3 037 990
- DE-A- 19 543 645
- US-A- 2 991 661
- US-A- 4 442 727
- PATENT ABSTRACTS OF JAPAN vol. 1995, no. 08, 29. September 1995 (1995-09-29) -& JP 07 127738 A (MAZDA MOTOR CORP), 16. Mai 1995 (1995-05-16)

## Beschreibung

Die vorliegende Erfindung betrifft eine Vorrichtung zum Schalten von automatisierten Fahrzeuggetrieben, insbesondere von Kraftfahrzeuggetrieben.

Gangwechselgetriebe für Kraftfahrzeuge sind vielfältig bekannt. So beschreibt die DE 30 37 990 A1, welche als nächstliegender Stand der Technik angesehen wird, eine Vorrichtung zum Schalten von automatischen Fahrzeuggetrieben, insbesondere von Kraftfahrzeuggetrieben, die mindestens zwei lastschaltbare Schaltelemente aufweist, in deren Kraftfluß jeweils durch nicht lastschaltbare Synchronisierungen verschiedene Übersetzungsstufen eingeschaltet werden können, und die über mindestens eine drehbare Schaltwalze verfügt, die auf ihrer Oberfläche Schaltnuten aufweist für die Betätigung der nicht lastschaltbaren Synchronisierungen.

Es sind auch bereits automatisierte Schaltgetriebe bekannt geworden, deren Aufbau im wesentlichen den konventionellen Handschaltgetrieben entspricht und bei denen der Gangwechsel weitgehend mechanisch über Stellantriebe bewirkt wird. Um dabei auch eine Schaltung unter Last vornehmen zu können, d. h. ohne zuvor eine Reduzierung der Leistung des Antriebsmotors bewirken zu müssen, ist neben der ersten Kupplung eine zweite Kupplung vorgesehen, die ebenso wie die erste Kupplung die Motorabtriebswelle mit einem Teil einer geteilten Getriebeantriebswelle verbindet, auf denen die den Getriebegängen entsprechenden Losräder abwechselnd gehalten sind. Auf diese Weise wird bei der Schaltung von einem in einen anderen Gang durch Ausrücken bzw. Einrücken der beiden Kupplungen von einer auf die andere Getriebeantriebswelle umgeschaltet, wobei durch eine entsprechende Steuerung der Kupplungen ein schneller und glatter Gangwechsel ohne die Notwendigkeit der Leistungsreduzierung des Antriebsmotors ermöglicht wird.

So beschreibt beispielsweise die DE 40 17 961 ein Steuersystem für ein lastschaltbares Doppelkupplungs-Getriebe, das zwei lastschaltbare Kupplungen aufweist, die mit der Motorabtriebswelle verbunden sind. Die Getriebeabtriebswelle ist dabei in der zentralen Eingangswelle gelagert und trägt die Kupplungskörper für die Synchronkupplungen der einzelnen Gänge, wobei in diesem Fall neben dem Rückwärtsgang noch fünf Vorwärtsgänge vorgesehen sind und sich die Gänge nach folgendem Schema auf die beiden Teilwellen verteilen: G1-G3-G5 und G2-G4-GR.

Mit diesem Lastschaltgetriebe ist es möglich, mit nur zwei lastschaltbaren Kupplungen fünf Gänge ohne Lastunterbrechung zu schalten.

Die DE 39 26 570 beschreibt ein unter Last schaltbares Gangwechselgetriebe mit zwei Vorgelegegetrieben für Kraftfahrzeuge, bei dem eine Eingangswelle und eine koaxiale Ausgangswelle durch wenigstens eines der beiden Vorgelegegetriebe in Antriebsverbindung bringbar sind sowie lediglich eine einzige Vorgelegewelle für die beiden jeweils durch eine reibschlüssige Antriebskupplung mit der Eingangswelle verbundenen Vorgelegegetriebe verwendet wird. Auf der Vorgelegewelle sind sowohl ein im ersten Gang als auch ein im Rückwärtsgang jeweils in die Antriebsverbindung einschaltbares Zahnrad angeordnet, wobei das Zahnrad für den ersten Gang durch eine synchronisierte Schaltkupplung mit der Vorgelegewelle verbindbar ist und sowohl das Vorgelegezahnrad für den Rückwärtsgang als auch ein koaxial zur Eingangswelle angeordnetes Hauptwellenzahnrad mit einem Zwischenzahnrad kämmen; das Vorgelegezahnrad für den Rückwärtsgang ist durch eine synchronisierte Wechselschaltkupplung mit der Vorgelegewelle verbindbar, während das mit dem Zwischenzahnrad kämmende Hauptwellenzahnrad als Zahnrad verwendet wird, welches sowohl mit der im ersten Gang eingerückten Antriebskupplung unmittelbar verbunden ist als auch mit dem Vorgelegezahnrad für den ersten Gang kämmt. Das Hauptwellenzahnrad der Zahnradstufe zur Bildung des ersten Ganges ist durch eine im ersten Gang ausgerückte und im sechsten Gang eingerückte Schaltkupplung, d. h. eine Wechselschaltkupplung mit der Ausgangswelle kuppelbar, während das Losrad einer im ersten Gang im Kraftfluß von der Vorgelegewelle zur Ausgangswelle liegenden Zahnradstufe durch eine im ersten Gang eingerückte und im sechsten Gang ausgerückte synchronisierte Schaltkupplung, d. h. eine zweite Wechselschaltkupplung mit der Ausgangswelle kuppelbar ist.

Dieses bekannte automatisierte Lastschaltgetriebe ermöglicht die Bildung von sechs Vorwärtsgängen und einem Rückwärtsgang mit insgesamt höchstens sechs Zahnradstufen, wobei ein- und dieselbe Zahnradstufe einmal im Kraftfluß zwischen der zugehörigen Antriebskupplung und dem Vorgelege zur Bildung eines ersten Vorwärtsganges und ein anderes Mal im Kraftfluß zwischen Vorlegewelle und Ausgangswelle zur Bildung eines zweiten Vorwärtsganges liegen kann.

Im Gegensatz zu den automatisierten Schaltgetrieben mit sequentieller Betätigung sind automatisierte Lastschaltgetriebe sehr bauaufwendig und damit teuer.

Aufgabe der vorliegenden Erfindung ist es, ein preiswertes automatisiertes lastschaltbares Getriebe mit sequentieller Betätigung zu schaffen.

Die Lösung dieser Aufgabe erfolgt mit einem in den Ansprüchen 1 angegebenen Getriebe; vorteilhafte Ausgestaltungen sind in den Unteransprüchen beschrieben.

Erfindungsgemäß wird also vorgeschlagen, ein automatisiertes Schaltgetriebe mit sequentieller Betätigung und zwei lastschaltbaren Elementen vorzusehen, wobei in den Kraftfluß der beiden Lastschaltelemente jeweils durch nicht lastschaltbare Synchronisierungen verschiedene Übersetzungsstufen einschaltbar sind; bei Verwendung einer Schaltwalze sind auf ihrer Oberfläche zwei Schaltnuten für die Betätigung der nicht lastschaltbaren Synchronisierungen vorgesehen. Damit erhält man ein Getriebe mit sequentieller Betätigung und einer Zuordnung der Schaltwalzenstellung zu den Synchronisierungen nach Anspruch 1, wobei immer zwei Gänge gleichzeitig aktivierbar sind, von denen dann tatsächlich nur ein Gang gemäß dem Willen des Fahrers eingelegt wird.

Das zweite vorgesehene Schaltelement kann also eine zweite Nut auf der Schaltwalze sein, so daß die Synchronisierungen der vorgewählten Gänge entsprechend der Nutform vorgewählt werden. Das zweite Schaltelement kann auch eine zweite, ebenfalls drehbar und verschiebbar gelagerte Schaltwalze sein.

Durch die erfindungsgemäße Ausgestaltung der beiden Lastschaltelemente als Nutformen auf einer Walze, die drehbar und axial verschiebbar gelagert ist und einer Doppelkupplung können also, wie bereits ausgeführt, immer zwei Gänge zugleich (mit Ausnahme des Rückwärtsgangs) aktiviert werden, wie es aus der nachfolgenden tabellarisch dargestellten Schaltelementlogik deutlich hervorgeht.

### Tabellen

| 1a) Zuordnung Lastschaltelement - Gang | | |
|---|---|---|
| Gang | LSE1 | LSE2 |
| 1 | x | |
| 2 | | x |
| 3 | x | |
| 4 | | x |
| 5 | x | |
| R | | x |

| 1b) Zuordnung Schaltwalzenstellung - Synchronisierungsbestätigung | | | | | | |
|---|---|---|---|---|---|---|
| Schaltwalzen anordnung | Sync 1 | Sync 2 | Sync 3 | Sync 4 | Sync 5 | Sync R |
| R | | | | | | x |
| N | | | | | | |
| V12 | x | x | | | | |
| V23 | | x | x | | | |
| V34 | | | x | x | | |
| V45 | | | | x | x | |

| 1c) Zuordnung Gang - Schaltwalzenstellung | |
|---|---|
| Gang | Schaltwalzenstellung |
| R | R |
| N | N |
| 1 | V12 |
| 2 | V12 oder V23 |
| 3 | V23 oder V34 |
| 4 | V34 oder V45 |
| 5 | V45 |

Im folgenden wird die Erfindung anhand der Zeichnung näher erläutert, in der ein vorteilhaftes Ausführungsbeispiel einer erfindungsgemäßen Vorrichtung schematisch dargestellt ist.

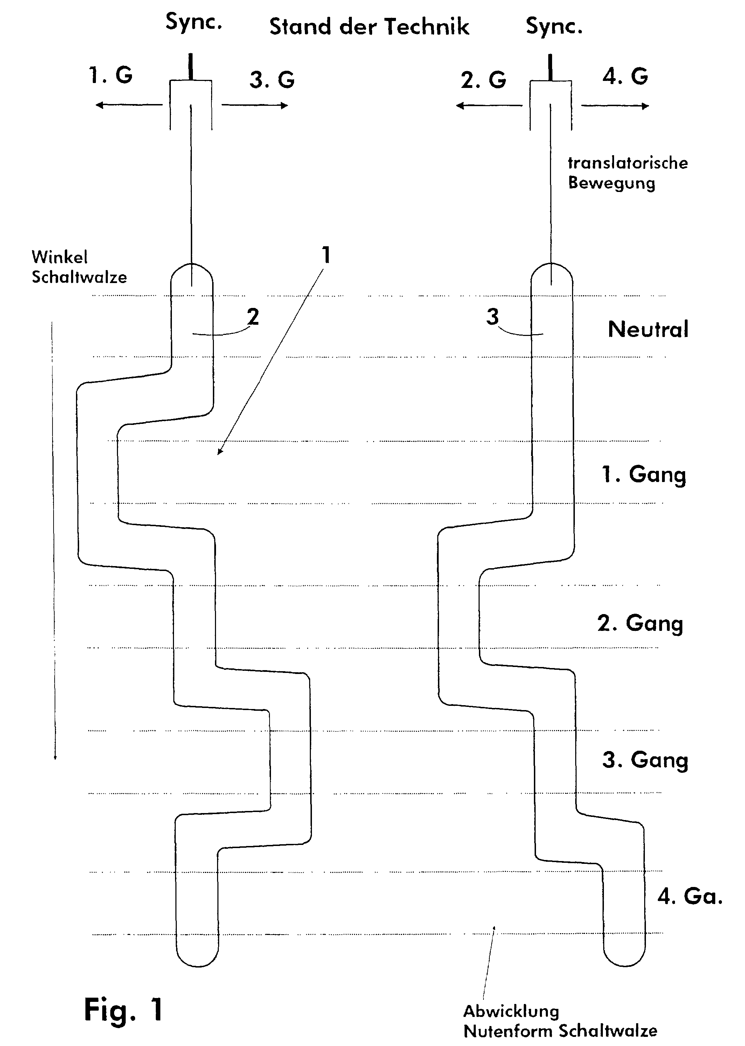

Fig. 1 zeigt schematisch die Abwicklung einer Schaltwalze 1 von herkömmlichem Aufbau, mit zwei Schaltnuten 2, 3, die derart ausgestaltet sind, daß immer nur ein Gang aktiviert werden kann; man erkennt, daß bei Aktivierung eines Ganges mittels einer der Schaltnuten 2, 3 sich die andere Schaltnut 3, 2 in der Neutralstellung befindet.

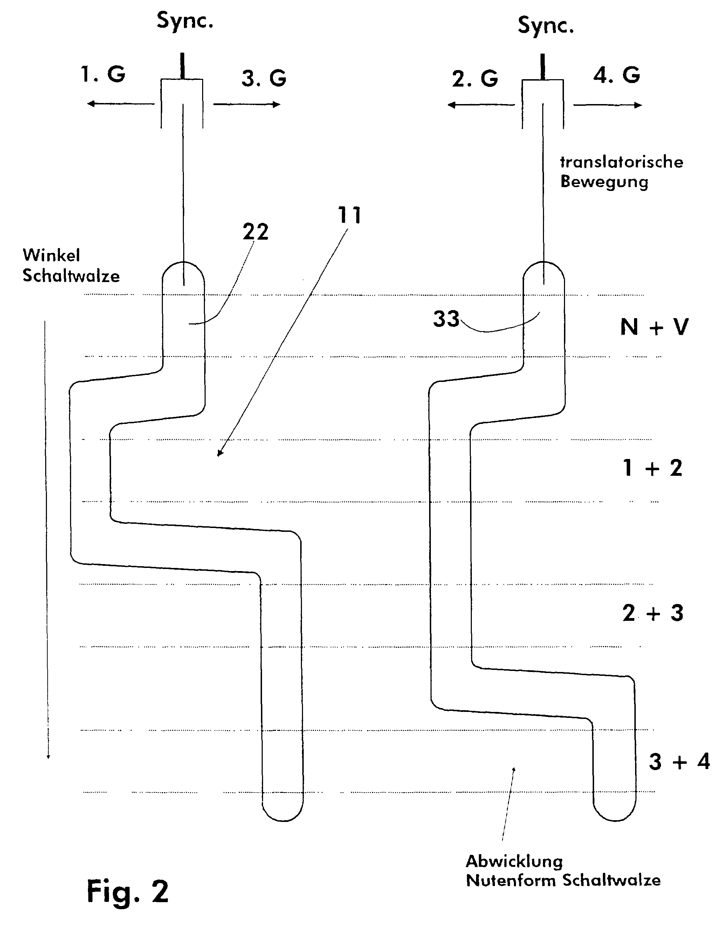

Fig. 2 zeigt hingegen schematisch die andersartige Ausgestaltung der beiden Schaltnuten 22, 33 auf einer Schaltwalze 11, wobei der Verlauf der Schaltnuten derart gewählt ist, daß (bei translatorischer Bewegung der Schaltwalze 11) immer zwei Synchronisierungen derart betätigt werden, daß jeweils zwei Gänge aktiviert werden, z. B. die Gänge 1 und 2 oder die Gänge 2 und 3 oder die Gänge 3 und 4.

Sollen mehrere nicht lastschaltbare Synchronisierungen durch eine einzige Schaltwalze betätigt werden, so sind dementsprechend mehrere Schaltnuten auf ein- und derselben Schaltwalze vorzusehen.

Bei einem anderen Ausführungsbeispiel ist es auch denkbar, daß zwei nebeneinander angeordnete Schaltwalzen jeweils mit einer entsprechenden Schaltnut zur Betätigung der verschiedenen nicht lastschaltbaren Synchronisierungen vorgesehen werden.

Gleichgültig, welche der beiden Ausführungsformen Verwendung findet, sei betont, daß der wesentliche Erfindungsgedanke darin zu sehen ist, daß sich der Aufwand für die Synchronisierungsbetätigung bei dem erfindungsgemäß ausgestalteten lastschaltbaren Getriebe nicht erhöht. Es können mit einer einzigen Walze also gleichzeitig zwei oder mehrere Synchronisierungsanordnungen gesteuert werden als Funktion der Anzahl der auf der Oberfläche der Schaltwalze vorgesehenen Schaltnuten. Mit etwas größeren Bauaufwand läßt sich derselbe Effekt durch zwei (oder auch mehrere) nebeneinander angeordnete Schaltwalzen erzielen.

### Bezugszeichen

- 1: Schaltwalze
- 11: Schaltwalze
- 2: Schaltnut
- 22: Schaltnut
- 3: Schaltnut
- 33: Schaltnut

## Patentansprüche

1. Vorrichtung zum Schalten von automatischen Fahrzeuggetrieben, insbesondere von Kraftfahrzeuggetrieben, mit mindestens zwei lastschaltbaren Schaltelementen, in deren Kraftfluß jeweils durch nicht lastschaltbare Synchronisierungen verschiedene Übersetzungsstufen eingeschaltet werden können, und mit mindestens einer drehbaren Schaltwalze (11), die auf ihrer Oberfläche Schaltnuten (22, 33) aufweist für die Betätigung der nicht lastschaltbaren Synchronisierungen, **dadurch gekennzeichnet, daß** die Schaltwalze (11) axial verschiebbar ist und die Zuordnung der Schaltwalzenstellung zu den Sychronisieranordnungen gemäß der nachfolgenden Tabelle erfolgt:
| Schaltwalzenstellung | Sync 1 | Sync 2 | Sync 3 | Sync 4 | Sync 5 | Sync R |
|---|---|---|---|---|---|---|
| R | | | | | | x |
| N | | | | | | |
| V12 | x | x | | | | |
| V23 | | x | x | | | |
| V34 | | | x | x | | |
| V45 | | | | x | x | |

2. Vorrichtung nach Anspruch 1, **dadurch gekennzeichnet, daß** dem einen Lastschaltelement die ungeraden Synchronisierungen (1, 3 5 usw.) und dem anderen Lastschaltelement die geraden (2, 4, 6 usw.) Synchronisierungen und der Rückwärtsgang zugeordnet sind.

3. Vorrichtung nach einem der vorhergehenden Ansprüche, **dadurch gekennzeichnet, daß** die Zuordnung zwischen den Gängen, den Schaltwalzenstellungen und den Lastschaltelementen gemäß folgender Tabelle erfolgt:
| Gang | Schaltwalzenstellung | Lastschaltelement 1 | Lastschaltelement 2 |
|---|---|---|---|
| R | R | | x |
| N | N | | |
| 1 | V12 | x | |
| 2 | V12 oder V23 | | x |
| 3 | V23 oder V34 | x | |
| 4 | V34 oder V45 | | x |
| 5 | V45 | x | |

## Claims

1. Device for shifting automatic vehicle transmissions, in particular motor vehicle transmissions, with at least two shifting elements which are shiftable under load, in the power flux of which various transmission stages can respectively be engaged by synchronising means which are not shiftable under load, and with at least one rotatable shift drum (11), having shifting grooves (22, 33) on its surface to actuate the synchronising means which are not shiftable under load, **characterised in that** the shift drum (11) is axially displaceable and the shift drum position is associated with the synchronising arrangements according to the following table:
| Shift drum position | Sync 1 | Sync 2 | Sync 3 | Sync 4 | Sync 5 | Sync R |
|---|---|---|---|---|---|---|
| R | | | | | | x |
| N | | | | | | |
| V12 | x | x | | | | |
| V23 | | x | x | | | |
| V34 | | | x | x | | |
| V45 | | | | x | x | |

2. Device according to claim 1, **characterised in that** the odd synchronising means (1, 3, 5 etc.) are associated with the one shift-under-load element and the even (2, 4, 6 etc.) synchronising means and the reverse gear are associated with the other shift-under-load element.

3. Device according to any one of the preceding claims, **characterised in that** the gears, the shift drum positions and the shift-under-load elements are associated according to the following table:
| Gear | Shift drum position | Shift-under-load element 1 | Shift-under-load element 2 |
|---|---|---|---|
| R | R | | x |
| N | N | | |
| 1 | V12 | x | |
| 2 | V12 or V23 | | x |
| 3 | V23 or V34 | x | |
| 4 | V34 or V45 | | x |
| 5 | V45 | x | |

## Revendications

1. Dispositif pour le changement de rapport de transmissions automatiques de véhicules, en particulier de transmissions de véhicules automobiles comprenant au moins deux éléments de changement aptes au transfert de charge dans le flux de force desquels différents étages de rapport de transmission peuvent être enclenchés par des synchronisations inaptes au transfert de charge, et au moins un cylindre de changement rotatif (11) qui comporte, sur sa surface, des rainures de changement (22, 23) pour l'actionnement des synchronisations inaptes au transfert de charge, **caractérisé en ce que** le cylindre de changement (11) est mobile en translation axiale et la correspondance entre la position du cylindre de changement et les dispositifs de synchronisation s'établit selon le tableau suivant :
| Position du cylindre de changement | Sync 1 | Sync 2 | Sync 3 | Sync 4 | Sync 5 | Sync R |
|---|---|---|---|---|---|---|
| R | | | | | | x |
| N | | | | | | |
| V12 | x | x | | | | |
| V23 | | x | x | | | |
| V34 | | | x | x | | |
| V45 | | | | x | x | |

2. Dispositif selon la revendication 1, **caractérisé en ce qu'**à l'un des éléments de transfert de charge, correspondent les synchronisations impaires (1, 3, 5 etc.) et qu'à l'autre élément de transfert de charge, correspondent les synchronisations paires (2, 4, 6 etc.) et la marche arrière.

3. Dispositif selon l'une des revendications précédentes, **caractérisé en ce que** la correspondance entre les vitesses, les positions du cylindre de changement et les éléments de transfert de charge s'établit selon le tableau suivant :
| Vitesse | Position du cylindre de changement | Elément de transfert de charge 1 | Elément de transfert de charge 2 |
|---|---|---|---|
| R | R | | x |
| N | N | | |
| 1 | V12 | x | |
| 2 | V12 ou V23 | | x |
| 3 | V23 ou V34 | x | |
| 4 | V34 ou V45 | | x |
| 5 | V45 | x | |
